# EUROPEAN PATENT APPLICATION

(11) **EP 1 273 600 A1**
(43) Date of publication of application: **08.01.2003**
(21) Application number: 02716386.4
(22) Date of filing: 25.01.2002
(51) Int. Cl.: C08F 290/06, C08F 283/01, C08F 2/18

(54) **PROCESS FOR PRODUCING FINE CURED-RESIN PARTICLE**

(30) Priority: 25.01.2001 JP 2001017055
(71) Applicant: Japan U-Pica Company Ltd., Tokyo 100-0011 (JP)
(72) Inventor: MASAWAKI, Keizo, c/o Res. Inst. of Japan U-PICA, Hiratsuka-shi, Kanagawa 254-0016 (JP)
(74) Representative: Müller-Gerbes, Margot, Dipl.-Ing.
(86) International application number: JP0200555
(87) International publication number: WO02059172

(57) **Abstract**

The present invention relates to a method of manufacturing a cured resin fine powder having spherical particles of particle diameter 10µm or less, by curing at ambient temperature or with heating, in the presence of a curing agent and if necessary an accelerator, an O/W type aqueous thermosetting resin dispersion that has been obtained by uniformly dispersing a liquid radical polymerization type thermosetting resin in an aqueous phase, and then removing water, washing if desired, and drying. With the cured resin fine powder of the present invention, by appropriately selecting and combining the raw materials used, the refractive index, oil absorption and so on of the cured resin fine powder can be controlled over broad ranges, and moreover the degree of hydrophilicity and the degree of lipophilicity can be adjusted; the cured resin fine powder can be variously used, for example, as a crack preventing agent or a low shrinkage agent, or as a modifier such as an agent for reducing residual monomer in a polymer.

## Description

### TECHNICAL FIELD

The present invention relates to a method of manufacturing a cured resin fine powder. More specifically, the present invention relates to a method of manufacturing a cured resin fine powder by curing at ambient temperature or with heating an O/W type aqueous thermosetting resin dispersion that has been obtained by uniformly dispersing a liquid radical polymerization type thermosetting resin in an aqueous phase, and then drying.

### BACKGROUND ART

Conventionally, to obtain a fine powder of a cured material of a radical polymerization type thermosetting resin such as an unsaturated polyester resin or an epoxy acrylate resin, in general a method has been adopted in which the cured material is pulverized. With the manufacture of a cured resin fine powder using the conventional method, the cost of carrying out the pulverization is high, and moreover a performance commensurate with the cost is not obtained, and hence the current state of affairs is that the method has hardly been put to practical use.

Moreover, cross-linked resin fine particles that are manufactured by adding a small amount of a polyfunctional monomer to a radical polymerization type monomer and using a suspension polymerization method are sold commercially as cured resin fine particles. Cross-linked resin fine particles obtained through this method are used, for example, as a low shrinkage agent for improving moldability when molding artificial marble bathtubs for which transparency is considered important using an unsaturated polyester resin, but the manufacturing cost is high, and hence the current state of affairs is that this method is used only in specific limited fields.

As described above, the only method of manufacturing a cured resin fine powder of an unsaturated polyester resin, an epoxy acrylate resin or the like is to pulverize the cured material, but pulverizing into the fine powder is expensive; the manufacturing cost is thus high, and moreover it is difficult to obtain a performance commensurate with the cost, and hence the method has only been used in a few specialty applications. Moreover, as cured resin fine powders possessing special functions, there are cross-linked resins comprising fine particles manufactured by adding a small amount-of a polyfunctional monomer to a radical polymerization type monomer and using a suspension polymerization method; however, there is scant freedom to select the refractive index, the polarity, the interfacial properties and so on, and hence in the case, for example, that such a cross-linked resin is used as a modifier, it has been difficult to achieve compatibility with the properties of the thermosetting resin that is added as a matrix resin.

It is an object of the present invention to provide a method of manufacturing, from a radical polymerization type thermosetting resin, a functional cured resin fine powder for which there is freedom to select properties such as refractive index, polarity and interfacial properties, the method being simple and inexpensive and thus overcoming the problem of high cost of conventional methods.

### DISCLOSURE OF THE INVENTION

Regarding the present invention, it was discovered that by curing an O/W type aqueous thermosetting resin dispersion that has been obtained by uniformly dispersing a liquid radical polymerization type thermosetting resin in an aqueous phase, a cured resin fine powder can easily be obtained.

The present invention thus relates to a method of manufacturing a cured resin fine powder, characterized by curing at ambient temperature or with heating an O/W type aqueous thermosetting resin dispersion that has been obtained by uniformly dispersing a liquid radical polymerization type thermosetting resin in an aqueous phase, and then removing water and drying.

In the present invention, the O/W type aqueous thermosetting resin dispersion obtained by uniformly dispersing a liquid radical polymerization type thermosetting resin in an aqueous phase is prepared by mixing together the liquid radical polymerization type thermosetting resin and water in a weight ratio in a range of 60:40 to 1:99 to disperse particles of the resin in the aqueous phase.

The above-mentioned liquid radical polymerization type thermosetting resin in the present invention is, for example, one selected from liquid unsaturated polyester resins, liquid epoxy (meth)acrylate resins, and liquid urethane (meth)acrylate resins.

With the cured resin fine powder obtained according to the present invention, during the manufacture thereof, in the step of manufacturing the resin for the O/W type aqueous thermosetting resin dispersion from which the cured resin fine powder is obtained, by appropriately selecting and combining monomer components, a desired function can be bestowed on the cured resin powder; the cured resin fine powder is thus used as a modifier such as a crack preventing agent, a low shrinkage agent or a residual monomer reducing agent, or as an added value bestowing agent or the like to which a special property has been bestowed, for example an ultra-hydrophilicity bestowing agent, an ultra-water-repellency bestowing agent, an antibacterial/fungicidal property bestowing agent to which an antibacterial agent or a fungicidal agent has been added, or a deodorizing property bestowing agent to which a deodorizing agent has been added, or by adding a pigment, as a powdered toner. By adding the cured resin fine powder that has been given such functionality to a radical polymerization type thermosetting resin, for example an unsaturated polyester resin, a cured material having a special property can be obtained while preserving the characteristics of the matrix resin.

By preparing the cured resin fine powder according to the present invention have a resin composition similar to that of the matrix resin that uses the properties of the cured resin fine powder, and matching the refractive index and adjusting the oil absorption, the cured resin fine powder is useful as a molding crack preventing agent for obtaining a molded article that has good interfacial adhesion to the matrix resin, has excellent transparency, and is degraded little by water.

Moreover, if many unreacted double bonds are made to remain in the cured resin fine powder, then by adding the cured resin fine powder to a radical polymerization type thermosetting resin, for example an unsaturated polyester resin, the cured resin fine powder has a function of reducing residual monomer in the cured material, and hence the unpleasant odor of monomer (e.g. styrene odor) after curing can be reduced and discharge of monomer into the environment can be reduced.

### BRIEF DESCRIPTION OF THE DRAWINGS

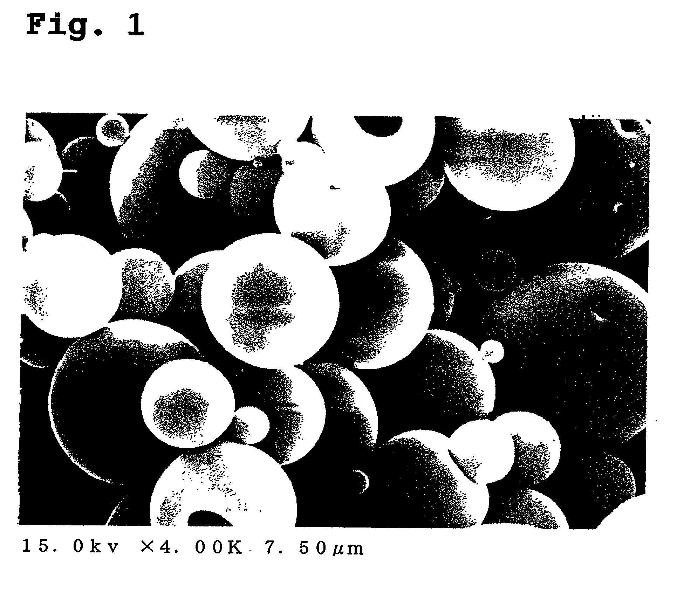

Fig. 1 shows a photomicrograph of a cured resin fine powder obtained in Example 1, this being a representative example of the cured resin fine powder according to the present invention.

### BEST MODE FOR CARRYING OUT THE INVENTION

With the present invention, by curing, in the presence of a curing agent and if necessary an accelerator, at ambient temperature or with heating, an O/W type aqueous thermosetting resin dispersion that has been prepared by mixing together a radical polymerization type thermosetting resin and water in a weight ratio in a range of 60:40 to 1:99 to uniformly disperse particles of the resin in the aqueous phase, then removing water, washing if desired, and drying, a cured resin fine powder having spherical particles of particle diameter 10µm or less can be manufactured.

With the cured resin fine powder according to the present invention, there is a large degree of freedom to select and combine the raw materials used, and by appropriately selecting and combining the raw materials used, the refractive index, oil absorption and so on of the cured resin fine powder can be controlled over broad ranges, and moreover the degree of hydrophilicity and the degree of lipophilicity can be adjusted. By making the cured resin fine powder of the present invention be, for example, a crack preventing agent or a low shrinkage agent, or a modifier such as an agent for reducing residual monomer in a polymer, and by using a cured resin fine powder having a composition of the same family as the matrix resin, then as with a fine particulate crosslinked resin manufactured by conventional suspension polymerization or the like, interfacial adhesion to the matrix resin can be made to be good, without it being necessary to introduce surface treatment or surface functional groups for improving the interfacial adhesion to the matrix resin, and without causing the water resistance or the mechanical strength to down. Moreover, the shape of the particles of the fine powder of the present invention is spherical, with there being no sharp corners that are prone to giving rise to concentration of stress as with a pulverized material, and hence even if the fine powder of the present invention is added to a resin, there will be virtually no down in the mechanical strength of the matrix resin. Furthermore, by making the amount of monomer used when manufacturing the cured resin fine powder low, double bonds in an oligomer of an unsaturated polyester or the like can be made to be prone to remaining unreacted. If a cured resin fine powder manufactured in this way in which unreacted double bonds remain in the oligomer is added to a radical polymerization type thermosetting resin such as an unsaturated polyester resin, then the molar ratio of monomer for the system as a whole will become low, and hence the amount of unreacted monomer in the cured material of the radical polymerization type thermosetting resin can be reduced.

Moreover, by adding an antibacterial agent, a fungicidal agent or a deodorizing agent, the cured resin fine powder of the present invention can be used in any of various applications as an added value bestowing agent such as an antibacterial property bestowing agent, a fungicidal property bestowing agent or a deodorizing property bestowing agent. Moreover, by manufacturing a fine powder to which a pigment is added, a powdered toner that has excellent water resistance and can be easily handled can be obtained, without color separation being brought about. The cured resin fine powder according to the present invention can thus also be used as a functionality bestowing agent.

Regarding the method of manufacturing the cured resin fine powder of the present invention, the cured resin fine powder can easily be obtained by curing an O/W type aqueous thermosetting resin dispersion that has been prepared by mixing together a radical polymerization type thermosetting resin to which a curing agent and if necessary an accelerator have been added and water in a weight ratio in a range of 60:40 to 1:99, preferably 60:40 to 20:80, to uniformly disperse particles of the resin in the aqueous phase. The cured resin fine powder according to the present invention is a fine powder having spherical particles of particle diameter 10µm or less, generally 0.1µm to 8.0µm.

In the manufacture of the cured resin fine powder according to the method of the present invention, the cured resin fine powder can be manufactured by curing an O/W type aqueous thermosetting resin dispersion for which the mixing ratio between the liquid radical polymerization type thermosetting resin and the water is in a range of 60:40 to 1:99 as a weight ratio, but the above mixing ratio between the radical polymerization type thermosetting resin and the water does not necessarily stipulate the mixing ratio between the liquid radical polymerization type thermosetting resin and the water in the step of manufacturing the O/W type aqueous thermosetting resin dispersion. In the step of manufacturing the O/W type aqueous thermosetting resin dispersion, regarding the mixing ratio between the liquid radical polymerization type thermosetting resin and the water, by using a system in which the proportion of the resin is relatively high, for example by mixing the resin and the water in a mixing ratio of about 70:30, an aqueous dispersion for which the particle diameter etc. is stable can easily be obtained; it is thus preferable to make the proportion of the resin relatively high when manufacturing the aqueous dispersion in the aqueous dispersion manufacturing step, and then adjust the mixing ratio between the resin and the water to be in the above-mentioned range during the subsequent curing step; the mixing ratio between the resin and the water thus does not necessarily have to be made the same in the aqueous dispersion manufacturing step and the curing step. That is, what is meant here is that mixing and dispersion are carried out with the mixing ratio between the liquid radical polymerization type thermosetting resin and the water being, for example, 70:30, thus obtaining the O/W type aqueous thermosetting resin dispersion, and then the mixing ratio between the resin and the water is adjusted, such that the mixing ratio between the radical polymerization type thermosetting resin and the water in the O/W type aqueous thermosetting resin dispersion in the curing step is in a range of 60:40 to 1:99 as a weight ratio. In the curing step, if the mixing proportion of the water is less than the above-mentioned range, then binding between the resin particles in the cured material will become strong during the curing, and hence it will be difficult to obtain a cured resin fine powder after the curing and drying. On the other hand, it is not wise to make the mixing proportion of the water be greater than the above-mentioned range, since then excessive cost and effort will be required to obtain the cured resin fine powder. Regarding the mixing and dispersion of the liquid radical polymerization type thermosetting resin and the water, the O/W type aqueous thermosetting resin dispersion can be manufactured using mechanical mixing means such as a dissolver (a high-speed rotating mixer) or a homomixer, or by irradiating with ultrasonic; the cured resin fine powder can be obtained by curing this O/W type aqueous thermosetting resin dispersion and drying. The water used may be any of ion exchange water, distilled water or tap water.

Examples of the liquid radical polymerization type thermosetting resin in the present invention are a liquid unsaturated polyester resin, a liquid epoxy (meth)acrylate resin, or a liquid urethane (meth)acrylate resin.

The liquid unsaturated polyester resin in the present invention is a liquid resin obtained by dissolving, in a polymerizable monomer having an ethylenic α,β-unsaturated double bond such as styrene, an unsaturated polyester obtained by condensation polymerization of a polyhydric alcohol such as a glycol as a main alcohol component thereof and an α,β-unsaturated dibasic acid and/or an anhydride thereof, and if necessary a saturated dibasic acid and/or an anhydride thereof.

Examples of the above-mentioned glycol include ethylene glycol, propylene glycol, diethylene glycol, dipropylene glycol, neopentyl glycol, 1,3-butanediol, 1,4-butanediol, 1,6-hexanediol, pentaerythritol, pentaerythritol derivatives such as pentaerythritol diallyl ether, allyl glycidyl ether, hydrogenated bisphenol A, bisphenol A, bisphenol A derivatives, and so on.

Moreover, examples of the above-mentioned α,β-unsaturated dibasic acid and/or anhydride thereof include maleic acid or the anhydride thereof, fumaric acid, itaconic acid or the anhydride thereof, and so on. These can be used singly, or two or more can be used mixed together.

Examples of the saturated dibasic acid and/or anhydride thereof include phthalic anhydride, terephthalic acid, isophthalic acid, tetrahydrophthalic anhydride, methyltetrahydrophthalic anhydride, endomethylenetetrahydrophthalic anhydride, adipic acid, sebacic acid, tetrabromophthalic anhydride, het acid, hexahydrophthalic anhydride, 1,3-cyclohexanedicarboxylic acid, 1,4-cyclohexanedicarboxylic acid, and so on. These can be used singly, or two or more can be used mixed together.

Moreover, examples of the polymerizable monomer having an ethylenic α,β-unsaturated double bond include vinyl monomers such as styrene, vinyltoluene, α-methylstyrene, vinyl acetate, methyl methacrylate and ethyl methacrylate, allyl monomers such as diallyl phthalate, diallyl isophthalate, triallyl isocyanurate and diallyl tetrabromophthalate, phenoxyethyl acrylate, 1,6-hexanediol acrylate, trimethylolpropane triacrylate, 2-hydroxyethyl acrylate, and so on. These can be used singly, or two or more can be used mixed together. Moreover, out of these, a vinyl monomer such as styrene or vinyltoluene is generally used.

Moreover, regarding the liquid unsaturated polyester resin in the present invention, it is also possible to use a liquid unsaturated polyester resin that is obtained by dissolving, in a polymerizable monomer having an ethylenic α,β-unsaturated double bond as described above, an unsaturated polyester manufactured using as part of the raw material thereof recovered PET, i.e. waste from high-molecular-weight polyethylene terephthalate products, for example waste such as used PET bottles, sheets and films, molding scrap, cutting scrap, and so on.

The liquid epoxy (meth)acrylate resin in the present invention is a liquid resin obtained by dissolving, in a polymerizable monomer having an ethylenic α,β-unsaturated double bond, an epoxy (meth)acrylate having a (meth)acryloyl group at the end of the molecule thereof, which is obtained by an addition reaction between acrylic acid or methacrylic acid and an epoxy resin having at least two glycidyl ether groups per molecule. Examples of the epoxy resin having at least two glycidyl ether groups per molecule include bisphenol type epoxy resins derived from bisphenol A, bisphenol F, bisphenol S or the like or a derivative thereof, bixylenol type epoxy resins derived from bixylenol or a derivative thereof, biphenol type epoxy resins derived from biphenol or a derivative thereof, and naphthalene type epoxy resins derived from naphthalene or a derivative thereof, and also epoxy resins such as novolak type epoxy resins; these can be used singly, or two or more can be used mixed together. Regarding the polymerizable monomer having an ethylenic α,β-unsaturated double bond, a polymerizable monomer like that used with the unsaturated polyester resin as described above can be used.

Moreover, the liquid epoxy acrylate or epoxy methacrylate resin is a liquid resin obtained by dissolving an epoxy acrylate or epoxy methacrylate as described above in a liquid polymerizable monomer such as styrene or diethylene glycol dimethacrylate.

Moreover, the liquid urethane (meth) acrylate resin in the present invention is a liquid resin obtained by dissolving, in a liquid polymerizable monomer such as styrene or diethylene glycol dimethacrylate, a urethane acrylate or urethane methacrylate having an acrylic or methacrylic double bond at the end of the molecule thereof, which is obtained by reacting a polyalcohol and/or a polyester polyol and/or a polyether polyol with a diisocyanate to introduce isocyanate group at the end of the molecule, and then reacting with an acrylate or methacrylate having an alcoholic hydroxyl group, or by first reacting an acrylate or methacrylate having an alcoholic hydroxyl group with an isocyanate so as to leave behind the isocyanate group, and then reacting the isocyanate group with a polyalcohol and/or a polyester polyol and/or a polyether polyol. These can be used singly, or two or more can be used mixed together.

In the method of manufacturing the cured resin fine powder of the present invention, the O/W type aqueous thermosetting resin dispersion is used with a curing agent and if necessary an accelerator added thereto, but it is preferable to prepare the O/W type aqueous thermosetting resin dispersion by adding the accelerator that is added if necessary to the liquid thermosetting resin in advance. The curing agent is generally added to the O/W type aqueous thermosetting resin dispersion when the aqueous dispersion is cured. In the case that the curing agent is a powder or a paste and hence it takes time to dissolve the curing agent uniformly in the resin, it is preferable to prepare the O/W type aqueous thermosetting resin dispersion by adding the curing agent to the liquid thermosetting resin in advance. In this case, the accelerator that is added if necessary is added to the aqueous dispersion when carrying out the curing.

A normal organic peroxide is used as the curing agent used in the present invention. Representative examples of such a curing agent include ketone peroxides such as methyl ethyl ketone peroxide, peroxyketals such as 1,1-bis(t-hexylperoxy)-3,3,5-trimethylcyclohexane, hydroperoxides such as cumene hydroperoxide, dialkyl peroxides such as dicumyl peroxide, diacyl peroxides such as benzoyl peroxide, peroxydicarbonates such as bis(4-t-butylcyclohexyl)peroxydicarbonate, peroxybenzoates such as t-butyl peroxybenzoate, and so on. The curing agent is generally used in a range of 0.5 to 3.0 parts by weight, preferably 0.5 to 2.0 parts by weight, per 100 parts by weight of the liquid radical polymerization type thermosetting resin.

Regarding the above-mentioned accelerator, an accelerator commonly used in the room-temperature curing of unsaturated polyester resins is used, for example a metal salt of an organic acid (a metallic soap) such as cobalt naphthenate, a tertiary amine such as N,N-dimethylaniline or N,N-dimethyl-para-toluidine, or ferrocene. Regarding these accelerators, for example, in the case that a ketone peroxide or a hydroperoxide is used as the curing agent, combination with a metallic soap such as cobalt naphthenate is preferable, in the case that the curing agent is a diacyl peroxide, combination with a tertiary amine is preferable, and in the case that the curing agent is a peroxycarbonate, combination with ferrocene is preferable. Regarding these accelerators, a metallic soap is used in a range of 0.02 to 2.0 parts by weight, preferably 0.2 to 1.0 parts by weight, converting to one having a metal content of 6% by weight, per 100 parts by weight of the liquid radical polymerization type thermosetting resin. A tertiary amine is used in a range of 0.05 to 1.0 parts by weight, preferably 0.1 to 0.5 parts by weight, per 100 parts by weight of the liquid radical polymerization type thermosetting resin.

When preparing the O/W type aqueous dispersion used in the present invention, a surfactant can be used if necessary. Using a surfactant enables the stability of the O/W type aqueous dispersion in the present invention to be raised, and hence in the case that the aqueous dispersion in the present invention is not used immediately after preparation but rather is made into the cured material after a few days has passed, it is preferable to add a surfactant.

As the surfactant used in the present invention, a nonionic type such as (1) an ester type, (2) an ether type, (3) an alkylphenol type, (4) a sorbitan ester type, (5) a polyoxyethylene sorbitan ester type, or (6) a special nonionic type is preferable, but any other type can also be used, for example (7) a cationic type such as a quaternary ammonium salt, or an onion type such as (8) a sulfonate, or (9) a sulfate ester; one can be used, or if necessary a plurality of surfactants can be used mixed together. Regarding the amount added of the surfactant, the surfactant is used in a range of 0.1 to 10 parts by weight, preferably 0.5 to 3.0 parts by weight, per 100 parts by weight of the liquid radical polymerization type thermosetting resin. If the amount added of the surfactant is less than 0.1 parts by weight, then adding the surfactant will have no effect, whereas even if an amount exceeding 10 parts by weight is added, there will be little further effect of improving the stability of the aqueous dispersion, and moreover adverse effects will increase such as the cost rising and washing after curing becoming troublesome.

As described above, the cured resin fine powder of the present invention can be prepared to have a specific desired function by carrying out the selection and combination of monomers appropriately so as to give desired properties during the manufacturing process of the liquid radical polymerization type thermosetting resin.

By, for example, adding the cured resin fine powder having this specific function to an unsaturated polyester resin gel-coat, or unevenly distributing it on a surface, the surface state of the laminated plate obtained can be modified. Moreover, by adding the cured resin fine powder of the present invention to a BMC, an SMC, or an unsaturated polyester resin composition for heat molding such as draw molding, an effect can be obtained such as reduction of molding shrinkage, improvement of surface gloss, or prevention of molding cracks.

Next, the present invention will be described more specifically through examples; however, the present invention is not limited to these examples.

### Example 1

### (Synthesis of resin)

1900g of isophthalic acid, 2000g of diethylene glycol and 700g of propylene glycol were put into a 5-liter glass 5-mouth flask equipped with a stirrer, a thermometer, a reflux condenser and a nitrogen-introducing tube, and reaction was carried out at 200°C until the acid value was 15mgKOH/g, with this taking 10 hours. Next, cooling down to 120°C was carried out, and then 1100g of maleic anhydride was added, and reaction was carried out at 210°C for 9 hours, thus obtaining an unsaturated polyester of acid value 4mgKOH/g and hydroxyl value 60mgKOH/g. The unsaturated polyester obtained was dissolved in 3300g of styrene in which had been dissolved 1g of hydroquinone, thus obtaining 8300g of a liquid unsaturated polyester resin.

### (Manufacture of cured resin fine powder)

1000g of the liquid unsaturated polyester resin synthesized as described above was weighed out into a metal vessel of inside diameter 20cm and height 30cm, 20g of commercially sold 50wt% benzoyl peroxide (net amount 1g per 100g of the resin) as a curing agent, and 30g of 'Pluronic L-61' (polyoxyethylene propylene ether type surfactant, made by Asahi Denka Kogyo K.K.) as a surfactant were added thereto, and mixing was carried out well with gentle stirring; 500g of tap water (33g per 67g of the resin) was then added, and high-speed stirring was carried out for 8 minutes at 5000rpm using a dissolver having blades of outside diameter 5cm, thus obtaining an O/W type aqueous dispersion. 2g of N,N-dimethylaniline was then added to the aqueous dispersion obtained and was dissolved thoroughly; 1000g of tap water was then added, thus making the total amount of water used 1500g (60g per 40g of the resin), and dispersion was carried out to form a uniform dispersion, and then curing was carried out at ambient temperature for 1 day. The sludge obtained was filtered, the solid thus separated from the water was subjected to washing with water and filtration a further two times, and then drying was carried out at ambient temperature for 1 day, thus obtaining a cured resin fine powder. The fine powder obtained was observed using an electron microscope, whereupon it was found that the majority of the particles were spherical particles of diameter from 3µm to 0.1µm. An electron micrograph of the fine powder is shown in Fig. 1.

### (Example of use of cured resin fine powder)

50g of the cured resin fine powder obtained as described above was added to 500g of a gel-coat (trade name UG-502) made by Japan U-PICA Co., Ltd. and dispersion was carried out, then 2.5g of 6% cobalt naphthenate was added and dissolved, 5g of methyl ethyl ketone peroxide was added as a curing agent and dissolved, and then using a spraying apparatus, the solution was applied onto a resin mold to a thickness of 0.5mm. After curing at ambient temperature for 1 day, using an unsaturated polyester resin for laminating 'U-PICA 4551PT' made by Japan U-PICA Co., Ltd., 3 plies of a no. 450 glass mat were laminated on. After leaving for 2 hours, curing was carried out at 60°C for 1 hour, thus manufacturing a laminated plate with a gel-coat. For comparison, a laminated plate for comparison was manufactured using the same procedure, except that the cured resin fine powder was not added.

Comparing the performances of the two laminated plates obtained, for the laminated plate for which the cured resin fine powder was added, the affinity of the surface to water was good, lipophilic soiling tended not to attach to the surface, and hydrophilic soiling could easily be removed simply by washing with water. Even though the laminated plate for which the cured resin fine powder of the present invention was added had good affinity to water, in water resistance tests, there was absolutely no difference between the laminated plate of the example and the laminated plate for comparison, and in 92°C one-side boiling tests, there was no change in either laminated plate after 500 hours. However, after 600 hours had passed, slight swelling had occurred, with the extent of this swelling being about the same for both laminated plates.

### Example 2

### (Synthesis of resin)

2150g of maleic anhydride and 2250g of propylene glycol were put into a 5-liter glass 5-mouth flask equipped with a stirrer, a thermometer, a reflux condenser and a nitrogen-introducing tube, and reaction was carried out at 210°C for 6 hours, thus obtaining an unsaturated polyester of acid value 9mgKOH/g and hydroxyl value 85mgKOH/g. The unsaturated polyester obtained was cooled down to 110°C. then 0.5g of hydroquinone was added and dissolved, 1000g of styrene was added and dissolving was carried out with stirring, and then cooling down to 40°C was carried out, thus obtaining 5000g of a liquid unsaturated polyester resin.

### (Manufacture of cured resin fine powder)

1000g of the liquid unsaturated polyester resin synthesized as described above was weighed out into a metal vessel of inside diameter 20cm and height 30cm, 10g of 'Novaron VZ100' (made by Toagosei Co., Ltd.) as an antibacterial agent, 20g of commercially sold 50wt% benzoyl peroxide (net amount 1g per 100g of the resin) as a curing agent, and 20g of 'Ionet T-20C' (polyoxyethylene sorbitan ester type surfactant, made by Sanyo Chemical Industries, Ltd.) as a surfactant were added thereto, and mixing was carried out well with gentle stirring; 1000g of tap water (100g per 100g of the resin) was then added, and high-speed stirring was carried out for 5 minutes at 5000rpm using a dissolver having blades of outside diameter 5cm, thus obtaining an O/W type aqueous dispersion. 2g of N,N-dimethylanlline was added to the aqueous dispersion obtained and was dissolved thoroughly, and then curing was carried out at ambient temperature for 1 day. The sludge obtained was filtered, the solid thus separated from the water was subjected to washing with water and filtration a further two times, and then drying was carried out at ambient temperature for 1 day, thus obtaining a cured resin fine powder. The fine powder obtained was observed using an electron microscope, whereupon it was found that the majority of the particles were spherical particles of diameter from 7µm to 0.5µm.

### (Example of use of cured resin fine powder)

40g of the cured resin fine powder obtained as described above was dispersed in 300g of styrene, and then using a spraying apparatus, the whole amount was applied onto a 1m-square (1m×1m) resin mold. After leaving at ambient temperature for 2 hours, it was confirmed that almost all of the styrene had evaporated off, and then 3g of 6% cobalt naphthenate was added to and dissolved in 600g of a gel-coat (trade name UG-502) made by Japan U-PICA Co., Ltd., 6g of 55% methyl ethyl ketone peroxide was added as a curing agent and dissolved, and using a spray apparatus, the solution was applied onto the resin mold to a thickness of 0.5mm. After curing at ambient temperature for 1 day, using an unsaturated polyester resin for laminating 'U-PICA 4551PT' made by Japan U-PICA Co., Ltd., 3 plies of a no. 450 glass mat were laminated on. After leaving for 2 hours, curing was carried out at 60°C for 1 hour, thus manufacturing a laminated plate with a gel-coat. For comparison, a laminated plate for comparison was manufactured using the same procedure, except that application of the cured resin fine powder was not carried out. Comparing the performances of the two laminated plates obtained, for the laminated plate for which application of the cured resin fine powder was carried out, the affinity of the surface to water was good and soiling tended not to attach to the surface, and even if the surface was soiled the soiling could easily be removed simply by washing with water. Moreover, the laminated plates were immersed in water at 37°C for 1 month, whereupon slime arose on the surface of the laminated plate for which application of the fine powder had not been carried out, but slime did not arise on the laminated plate for which application of the fine powder had been carried out. Furthermore, even though the laminated plate for which application of the cured resin fine powder of the present invention was carried out had good affinity to water, in water resistance tests, there was absolutely no difference between the laminated plate of the example and the laminated plate for comparison, and in 92°C one-side boiling tests, there was no change in either laminated plate after 500 hours. However, after 600 hours had passed, slight swelling had occurred, with the extent of this swelling being about the same for both laminated plates.

### Example 3

### (Manufacture of cured resin fine powder)

1000g of a liquid unsaturated polyester resin (made by Japan U-PICA Co., Ltd., trade name 'U-PICA 6502' (specific gravity 1.10)) was weighed out into a metal vessel of inside diameter 20cm and height 30cm, 20g of commercially sold 50wt% benzoyl peroxide (net amount 1g per 100g of the resin) as a curing agent, and 30g of 'Pluronic L-61' (polyoxyethylene propylene ether type surfactant, made by Asahi Denka Kogyo K.K.) as a surfactant were added thereto, and mixing was carried out well with gentle stirring; 2000g of tap water (67g per 33g of the resin) was then added, and high-speed stirring was carried out for 8 minutes at 4000rpm using a dissolver having blades of outside diameter 5cm, thus obtaining an O/W type aqueous dispersion. 2g of N,N-dimethylaniline was then added to the aqueous dispersion obtained and was dissolved thoroughly, and then curing was carried out at ambient temperature for 1 day. The sludge obtained was filtered, and after separating the solid from the water, drying was carried out for 5 hours in a hot blast furnace at 60°C, thus obtaining a cured resin fine powder. The fine powder obtained was observed using an electron microscope, whereupon it was found that the majority of the particles were spherical particles of diameter from 5µm to 0.1µm.

### (Example of use of cured resin fine powder)

100g of the cured resin fine powder obtained in above-mentioned Example 2 was added to 2000g of a resin for draw molding (trade name U-PICA 3503) made by Japan U-PICA Co., Ltd. and dispersion was carried out, and then molding was carried out using a draw molding method, whereupon a molded article with no fine cracks and no mottling was obtained. For comparison, a molded article was formed without adding the cured resin fine powder, but a large number of fine cracks were observed in the cross section of the molded article, and the strength was low.

### Example 4

### (Synthesis of resin)

2700g of isophthalic acid, 2000g of neopentyl glycol and 200g of propylene glycol were put into a 5-liter glass 5-mouth flask equipped with a stirrer, a thermometer, a reflux condenser and a nitrogen-introducing tube, and reaction was carried out at 190°C until the acid value was 15mgKOH/g, with this taking 10 hours. Next, cooling down to 120°C was carried out, and then 800g of fumaric acid was added, and reaction was carried out at 210°C for 7 hours, thus obtaining an unsaturated polyester of acid value 20mgKOH/g. The unsaturated polyester obtained was dissolved in 2700g of styrene in which had been dissolved 1g of hydroquinone, thus obtaining 7700g of a liquid unsaturated polyester resin.

### (Manufacture of cured resin fine powder)

1000g of the liquid unsaturated polyester resin synthesized as described above was weighed out into a metal vessel of inside diameter 20cm and height 30cm, 20g of commercially sold 50wt% benzoyl peroxide (net amount 1g per 100g of the resin) as a curing agent, and 10g of 'Pluronic L-61' (polyoxyethylene propylene ether type surfactant, made by Asahi Denka Kogyo K.K.) as a surfactant were added thereto, and mixing was carried out well with gentle stirring; 500g of tap water (33g per 67g of the resin) was then added, and high-speed stirring was carried out for 5 minutes at 4000rpm using a dissolver having blades of outside diameter 5cm, thus obtaining an O/W type thermosetting resin aqueous dispersion. 2g of N,N-dimethylaniline was then added to the aqueous dispersion obtained and was dissolved thoroughly; 1000g of tap water was then added, thus making the total amount of water used 1500g (60g per 40g of the resin), and dispersion was carried out to form a uniform dispersion, and then curing was carried out at 60°C for 2 hours. The sludge obtained was filtered, the solid thus separated from the water was subjected to washing with water and filtration a further two times, and then drying was carried out for 5 hours in a hot blast furnace at 80°C, thus obtaining a cured resin fine powder. The fine powder obtained was observed using an electron microscope, whereupon it was found that the majority of the particles were spherical particles of diameter 5µm to 0.1µm.

### (Example of use of cured resin fine powder)

1kg of the cured resin fine powder obtained as described above, 30kg of glass frit, 10kg of 3mm-long glass fibers, and a curing agent, a thickener and a mold release agent were added to 10kg of a resin for artificial marble BMC bathtubs (trade name U-PICA 7685) made by Japan U-PICA Co., Ltd., dispersion was carried out for 10 minutes using a planetary mixer made by Inoue Manufacturing Co., Ltd., and then aging was carried out at 40°C for 1 day. A bathtub was molded from the BMC molding material obtained, whereupon a bathtub having transparency and excellent surface smoothness was obtained, with cracks not arising. The total light transmittance of the bathtub obtained was 29% at a part of thickness 9mm. For comparison, a bathtub was molded as above but without adding the cured resin fine powder, but with this bathtub cracks appeared during the molding, and hence a product could not be obtained.

### Example 5

### (Synthesis of resin)

3000g of maleic anhydride and 2500g of propylene glycol were put into a 5-liter glass 5-mouth flask equipped with a stirrer, a thermometer, a reflux condenser and a nitrogen-introducing tube, and reaction was carried out at 210°C for 7 hours, thus obtaining an unsaturated polyester of acid value 30mgKOH/g. The unsaturated polyester obtained was dissolved in 2000g of styrene in which had been dissolved Ig of hydroquinone, thus obtaining 7000g of a liquid saturated polyester resin.

### (Manufacture of cured resin fine powder)

1000g of the liquid unsaturated polyester resin synthesized as described above was weighed out into a metal vessel of inside diameter 20cm and height 30cm, 20g of commercially sold 50wt% benzoyl peroxide (net amount 1g per 100g of the resin) as a curing agent, and 30g of 'Pluronic L-61' (polyoxyethylene propylene ether type surfactant, made by Asahi Denka Kogyo K.K.) as a surfactant were added thereto, and mixing was carried out well with gentle stirring; 500g of tap water (33g per 67g of the resin) was then added, and high-speed stirring was carried out for 5 minutes at 4000rpm using a dissolver having blades of outside diameter 5cm, thus obtaining an O/W type aqueous dispersion. 2g of N,N-dimethylaniline was then added to the aqueous dispersion obtained and was dissolved thoroughly; 1000g of tap water was then added, thus making the total amount of water used 1500g (60g per 40g of the resin), and dispersion was carried out to form a uniform dispersion, and then curing was carried out at ambient temperature for 1 day. The sludge obtained was filtered, the solid obtained by separating from the water was subjected to washing with water and filtration a further two times, and then drying was carried out for 2 hours in a hot blast furnace at 105°C, thus obtaining a cured resin fine powder. The fine powder obtained was observed using an electron microscope, whereupon it was found that the majority of the particles were spherical particles of diameter from 6µm to 0.1µm.

### (Example of use of cured resin fine powder)

50g of the cured resin fine powder obtained as described above was added to 500g of a resin for hand lay-up laminating (trade name U-PICA 4551PT) made by Japan U-PICA Co., Ltd. and dispersion was carried out, and then 5g of commercially sold 55% methyl ethyl ketone peroxide was added as a curing agent and dissolved, the solution was impregnated into a 450g/m² glass mat, and curing was carried out at ambient temperature for 1 day. After the curing, the amount of unreacted styrene in the cured material was measured, whereupon this amount was 1.7% relative to the total amount of the cured material. For comparison, a cured material was formed without adding the cured resin fine powder, but the amount of unreacted styrene in the cured material was 4.1% relative to the total amount of the cured material.

### Example 6

### (Manufacture of cured resin fine powder)

1000g of a liquid epoxy methacrylate resin (made by Japan U-PICA Co., Ltd., trade name 'Neopol 8250L' (specific gravity 1.07)) was weighed out into a metal vessel of inside diameter 20cm and height 30cm, 10g of 'Novaron AGT330' (made by Toagosei Co., Ltd.) as an antibacterial agent, 20g of commercially sold 50wt% benzoyl peroxide (net amount 1g per 100g of the resin) as a curing agent, and 30g of 'Pluronic L-61' (polyoxyethylene propylene ether type surfactant, made by Asahi Denka Kogyo K.K.) as a surfactant were added thereto, and mixing was carried out well with gentle stirring; 500g of tap water (33g per 67g of the resin) was then added, and high-speed stirring was carried out for 5 minutes at 4000rpm using a dissolver-having blades of outside diameter 5cm, thus obtaining an O/W type aqueous dispersion. 2g of N,N-dimethylaniline was then added to the aqueous dispersion obtained and was dissolved thoroughly; 1500g of tap water was then added, thus making the total amount of water used 2000g (67g per 33g of the resin), and dispersion was carried out to form a uniform dispersion, and then curing was carried out at ambient temperature for 1 day. The sludge obtained was filtered, the solid thus separated from the water was subjected to washing with water and filtration a further two times, and then drying was carried out for 5 hours in a hot blast furnace at 60°C, thus obtaining a cured resin fine powder. The fine powder obtained was observed using an electron microscope, whereupon it was found that the majority of the particles were spherical particles of diameter from 5µm to 0.1µm.

### (Example of use of cured resin fine powder)

50g of the cured-resin fine powder obtained as described above was added to 500g of a gel-coat (trade name UG-502P) made by Japan U-PICA Co., Ltd. and dispersion was carried out, then 5g of 55% methyl ethyl ketone peroxide (MEKPO) was added as a curing agent and dissolved, and then using a spraying apparatus, the solution was applied onto a resin mold to a thickness of 0.1mm. After the application, a gel-coat obtained by adding 1 PHR of 55% MEKPO as a curing agent to UG-502P and dissolving was then applied thereupon to a thickness of 0.4mm using the same spraying apparatus, thus making the total thickness 0.5mm. After curing at ambient temperature for 1 day, using a resin for laminating 'U-PICA 4551PT' made by Japan U-PICA Co., Ltd., 3 plies of a no. 450 glass mat were laminated on. After leaving for 2 hours, curing was carried out at 60°C for 1 hour, thus manufacturing a laminated plate with a gel-coat. For comparison, a laminated plate for comparison was manufactured using the same procedure, except that only the gel-coat to which the cured resin fine powder was added was applied, this being to a thickness of 0.5mm; the antibacterial performance was exactly the same for the two laminated plates, but with the laminated plate obtained from the gel-coat to which the cured resin fine powder was added, it was possible to manufacture a laminated plate with a gel-coat having the same antibacterial performance but using one fifth of the amount of the antibacterial agent and hence at low cost.

### Comparative Example 1

1000g of a liquid unsaturated polyester resin (made by Japan U-PICA Co., Ltd., trade name 'U-PICA 6502' (specific gravity 1.10)) was weighed out into a metal vessel of inside diameter 20cm and height 30cm, 20g of commercially sold 50wt% benzoyl peroxide (net amount 1g per 100g of the resin) as a curing agent, and 30g of 'Pluronic L-61' (polyoxyethylene propylene ether type surfactant, made by Asahi Denka Kogyo K.K.) as a surfactant were added thereto, and mixing was carried out well with gentle stirring; 500g of tap water (33g per 67g of the resin) was then added, and high-speed stirring was carried out for 5 minutes at 4000rpm using a dissolver having blades of outside diameter 5cm, thus obtaining an O/W type aqueous dispersion. 2g of N,N-dimethylaniline was then added to the aqueous dispersion obtained and was dissolved thoroughly, and then curing was carried out at ambient temperature for 1 day. The cured material obtained was an extremely brittle solid, being a lump for which powder broke off easily from the surfaces thereof, and a good powder could not be obtained even when drying was carried out.

### INDUSTRIAL APPLICABILITY

Regarding the cured resin fine powder obtained according to the present invention, a desired function can be bestowed on the cured resin powder by appropriately selecting and combining monomer components; the cured resin fine powder is thus useful as a modifier such as a crack preventing agent, a low shrinkage agent or a residual monomer reducing agent, and moreover is useful as an added value bestowing agent or the like to which a special property has been bestowed, for example an ultra-hydrophilicity bestowing agent, an ultra-water-repellency bestowing agent, an antibacterial/fungicidal property bestowing agent to which an antibacterial agent or a fungicidal agent has been added, or a deodorizing property bestowing agent to which a deodorizing agent has been added, or by adding a pigment, as a powdered toner.

## Claims

1. A method of manufacturing a cured resin fine powder, **characterized by** curing at ambient temperature or with heating an O/W type aqueous thermosetting resin dispersion that has been obtained by uniformly dispersing a liquid radical polymerization type thermosetting resin in an aqueous phase, and then removing water and drying.

2. The method of manufacturing a cured resin fine powder disclosed in claim 1, **characterized in that** the O/W type aqueous thermosetting resin dispersion obtained by uniformly dispersing a liquid radical polymerization type thermosetting resin in an aqueous phase is prepared by mixing together the liquid radical polymerization type thermosetting resin and water in a weight ratio in a range of 60:40 to 1:99 to disperse particles of the resin in the aqueous phase.

3. The method of manufacturing a cured resin fine powder disclosed in claim 1 or 2, **characterized in that** the liquid radical polymerization type thermosetting resin is one selected from liquid unsaturated polyester resins, liquid epoxy (meth)acrylate resins and liquid urethane (meth)acrylate resins.

4. The method of manufacturing a cured resin fine powder disclosed in claim 1 or 2, **characterized in that** the O/W type aqueous thermosetting resin dispersion obtained by uniformly dispersing a liquid radical polymerization type thermosetting resin in an aqueous phase is cured in the presence of a curing agent and if necessary an accelerator.

5. The method of manufacturing a cured resin fine powder disclosed in any of claims 1 through 4, **characterized in that** the cured resin fine powder has a particle diameter of 10µm or less.

6. The method of manufacturing a cured resin fine powder disclosed in claim 5, **characterized in that** the cured resin fine powder has a particle diameter in a range of 0.1µm to 8.0µm.
